# EUROPEAN PATENT SPECIFICATION

(11) **EP 1 756 840 B1**
(45) Date of publication and mention of the grant of the patent: **28.09.2011**
(21) Application number: 05747439.7
(22) Date of filing: 01.06.2005
(51) Int. Cl.: G21C 7/08, G21C 17/04

(54) **A METHOD FOR OPERATING A REACTOR OF A NUCLEAR PLANT**
VERFAHREN ZUM BETRIEB EINES REAKTORS EINER NUKLEARANLAGE
PROCEDE D'EXPLOITATION DU REACTEUR D'UNE CENTRALE NUCLEAIRE

(30) Priority: 14.06.2004 SE 0401514
(43) Date of publication of application: 28.02.2007
(73) Proprietor: Westinghouse Electric Sweden AB, 721 63 Västerås (SE)
(72) Inventor: LIMBÄCK, Magnus, S-723 37 Västerås (SE); RYTTERSSON, Kristina, S-723 42 Västerås (SE); HELMERSSON, Sture, S-730 40 Kolbäck (SE)
(74) Representative: Berglund, Stefan
(86) International application number: PCT/SE2005/000833
(87) International publication number: WO 2005/122183

(56) References cited:
- WO-A1-01/39207
- WO-A1-99/27541
- US-A- 4 057 466
- US-A- 5 537 450

## Description

### BACKGROUND OF THE INVENTION AND PRIOR ART

The present invention refers a method for operating a reactor of a nuclear plant as defined in the pre-characterising portion of claim 1. The reactor is a light water reactor and more precisely a boiling water reactor, BWR, or a pressure water reactor, PWR.

Such a reactor includes a reactor vessel enclosing a core having a plurality of fuel elements and a number of control rods. Each fuel element includes a plurality of fuel rods, which each includes a cladding and nuclear fuel in the form of a pile of fuel pellets of substantially uranium dioxide. The fuel pellets are enclosed in an inner space formed by the cladding. The fuel pellets do not fill the whole inner space but there is also a free volume in the inner space in which the fuel pellets are permitted to swell, i.e. through thermal expansion. The free volume, i.e. the inner space which is not filled by fuel pellets, is filled with a fill gas. Each of the control rods is insertable to and extractable from a respective position between (BWR) or in (PWR) respective fuel elements in the core in order to influence the power of the reactor.

During unfortunate circumstances it may happen that a smaller defect arises on the cladding of the fuel rod, a so called primary defect. Such a primary defect can arise through wear from a foreign object. A small wear defect normally does not result in any significant dissolving and washing out of the uranium pellets of the rod. A small primary defect may however result in a secondary degradation and the development of a larger secondary defect.

When a primary defect has been developed there is a communication passage between the inner space of the rod and the coolant water of the reactor. This means that water and steam may penetrate the inner space of the fuel rod until the internal pressure of the rod is the same as the system pressure of the reactor. During this process the inner side of the cladding and the fuel pellet oxidise while releasing hydrogen from the water molecules in the coolant water. This leads in its turn to an environment with a very high partial pressure of hydrogen at a distance from the primary defect; a phenomenon which is called "oxygen starvation" or "steam starvation". In such an environment the inner side of the cladding is inclined to absorb hydrogen very quickly, so called hydrogenation, which is a basic material property of zirconium and zirconium-based alloys. This result in a locally very high hydrogen concentration in the cladding, which in its turn significantly deteriorates the mechanical properties of the cladding. The cladding becomes very brittle and this can due to self-induced stresses or due to external load give rise to crack inducing, crack growth and the development of a secondary fuel defect.

During normal operation of the reactor at principally full power, a primary defect may, as appears from above, arise in a fuel rod. It can then be assumed that the defect fuel rod has an average load of for instance 20kW/m, a certain pellet-cladding-gap, for instance 5-20µm, and an internal pressure of for instance 5-100 bars. The internal pressure in fuel rods for boiling water reactors lies during operation in the lower region of the interval, whereas the internal pressure in fuel rods for pressure water reactors during operation can lie in the upper region of the interval. When the primary defect arises, the pressure difference between the internal pressure of the fuel rod and the system pressure will disappear, i.e. the internal pressure of the fuel rod will be the same as the system pressure. The system pressure in a boiling water reactor is typically about 70 bars, whereas the system pressure in a pressure water reactor typically is about 150 bars. When this occurs, the fill gas, which normally substantially consists of helium and fission gases from the fuel pellets, will be moved towards both the ends of the fuel rod, whereas steam is introduced until the internal pressure of the fuel rod is the same as the system pressure. Before the radiation is initiated the fill gas of the fuel rod normally substantially consists of helium and the internal pressure of the fuel rod is at room temperature typically 1-40 bars. The internal pressure in fuel rods for boiling water reactors typically lies in the lower region of the interval, whereas the internal pressure in fuel rods for pressure water reactors normally lies in the upper region of the interval. As mentioned above, the steam will during this process react with the cladding and the fuel pellets during release of hydrogen from the water molecules which react with the cladding or the fuel pellets. This means that an area with a very high partial pressure of hydrogen can be obtained at a distance from the primary defect. It is thus possible to imagine that very soon after the occurrence of the primary defect an area with fill gas at each of the two ends of the fuel rod has been formed. The free volumes, which are present directly adjacent to the ends, may initially contain substantially pure hydrogen gas, mixed with inert gases but free from steam. In this areas, where the partial pressure of hydrogen directly after the primary defect is very high, the risk for secondary degradation is high. If the partial pressure of hydrogen sinks and the partial pressure of steam increases, the local massive hydrogen absorption will decrease and the hydrogen absorption can take place more homogeneously over the inner side of the cladding wall, which reduces the risk for local secondary degradation.

US-A-5,537,450 discloses a device for detecting whether there is a fuel defect. The device is arranged to detect fuel defects during operation of the reactor by conveying a part of the off-gases from the reactor via a gamma spectrograph that continuously measures the nuclide composition and the activity level in the off-gases. It is also known to localise a fuel defect by a method called "flux-tilting", which means that the control rods are controlled one at the time so that the power is changed locally in the core at the same time as the activity level in the off-gases is measured. An increase of the activity level in the off-gases can be recognized at control rod movements in the proximity of the fuel defect. In such a way the fuel defect can be localized. This method is time-consuming and during the time when the localization takes place the power of the reactor is reduced to between 60 and 80% of full power.

WO 99/27541 discloses a method and device for evaluating the integrity of the nuclear fuel, comprising producing guidelines for continuing operation after detecting defects.

### SUMMARY OF THE INVENTION

The object of the present invention is to counteract degradation of a possible primary defect and thus reduce the risk of a secondary defect during a continuing operation of the reactor.

This object is achieved by the method step defined in claim 1.

Since the reactor, when a primary defect has been detected, during the particular state at least periodically is operated at a reduced power, the nuclear reaction in the fuel will decrease and thus the temperature in the fuel pellets decreases, which reduces the thermal expansion of the fuel pellets. In such a way the free volume in the inner space of the fuel rod increases. This means that further steam may penetrate the inner space of the fuel rod for maintaining the pressure equalisation between the inner space of the fuel rod and the system pressure. In addition, the reaction rates for the oxidation of the cladding and the fuel pellets will as well as for the hydrogenation of the cladding decrease when the reactor power is reduced and the fuel temperature decreases.

Since the defect fuel rod during the defined time period has a substantially lower fuel pellet temperature and a substantially larger free volume in the inner space, the gases, i.e. the fill gas, formed fission gases, hydrogen gas and steam, will be mixed through diffusion. Diffusion takes of course also place at higher pellet temperatures but the oxidation and hydrogenation rates may then be so high that the diffusion will have an insignificant importance in comparison to the gas movements arising due to the pressure difference between the different parts of the fuel rod.

Consequently, the present invention lies in the achievement of the gas mixture via diffusion being the dominating mechanism by significantly decreasing the consumption of oxygen and hydrogen in the fuel rod. During these conditions we may thus obtain a gas mixture in the inner space at the same time as the hydrogenation is relatively slow. When a proper mixture of hydrogen and water molecules has been obtained in the inner space of the fuel rod, the hydrogen absorption at a continuing operation will take place more homogeneously along the whole fuel rod and it is thus possible to avoid the creation of a zone of the cladding that has significantly degraded mechanical properties as a consequence of a powerful local hydrogenation.

The homogeneous hydrogen distribution makes the fuel rod significantly less sensible to crack inducing, crack growth and the development of a secondary defect. Consequently, the limited time period, during which the reactor is operated at least periodically reduced power, leads to the very significant increase of the probability that the reactor with the same set of fuel rods thereafter can be operated until the next scheduled normal revision shut down without any additional shut downs for removing defect fuel and without requiring the introduction of control rods for locally reducing the power in the region of the core where the defect fuel rod is located. This method may thus offer a significant economic advantage in comparison to the measures normally used today.

According to a further development of the method according to the invention, said reducing of the power is obtained through inserting at least some of said control rods to the respective position in the core. Such a power reduction can take place very quickly and lead to a quick decrease of the temperature of the fuel pellets, which decreases their volume and thus increases the free volume in the inner space of the defect fuel rod.

According to a further development of the method according to the invention, substantially all control rods are at least periodically inserted into the respective position in the core during the particular state, wherein a particularly significant power reduction is obtained.

According to a further development of the method according to the invention, said reducing of the power is obtained through successive inserting of different groups of said control rods to the respective position in the core, wherein each such group defines a respective specific part of the core. The particular state may thus also be established for different parts of the core in successive periods. Individual control rods or groups of control rods may then be used for the power reduction. This permits identification of the position of the defect fuel rod and limits the necessary power reduction.

According to a further development of the method according to the invention, said reducing of the power is performed at least within 48h and preferably within 24h after the detection of a defect. Advantageously, said reducing of the power is performed substantially immediately after the detection of a defect. It is advantageous if the power reduction takes place quickly so that the desired mixture in the inner space is obtained as soon as possible after the occurrence of a defect.

According to a further development of the method according to the invention, the reactor is operated at the reduced power during the whole time period.

According to a further development of the method, the particular state involves that at least some of the control rods are alternately inserted into and extracted from the respective position for obtaining an alternating increase and decrease of the power. This may be advantageous when the position of the defect fuel rod has been identified.

According to a further development of the method according to the invention, said monitoring includes continuous monitoring during the operation of the reactor. The monitoring may then advantageously include sensing of the presence of one or several fission gases in an off-gas flow from the reactor.

### BRIEF DESCRIPTION OF THE DRAWINGS

The present invention is now to be explained more closely by means of an embodiment that is disclosed as an example and with reference to the drawings attached hereto, in which
- Fig. 1: discloses schematically a nuclear plant and
- Fig. 2: discloses schematically a longitudinal section through a fuel rod.

### DETAILED DESCRIPTION OF VARIOUS EMBODIMENTS

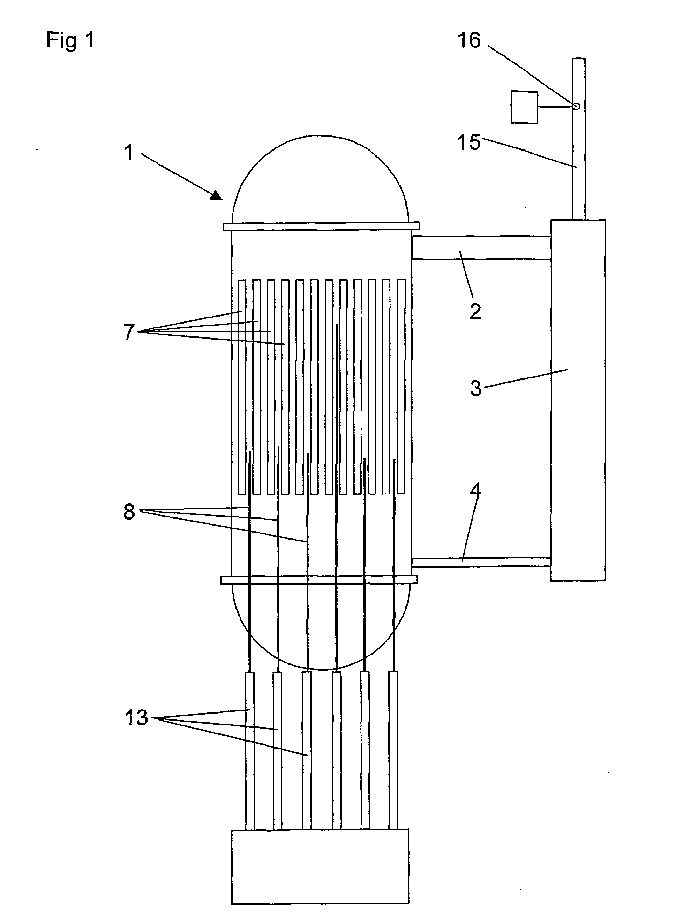

Fig. 1 discloses a nuclear plant including a reactor 1, a discharge conduit 2 from the reactor 1, a utility device 3 and a feedback conduit 4 from the utility device 3 back to the reactor 1. The reactor 1 may be a boiling water reactor, BWR, or a pressure water reactor, PWR. In the example disclosed, it is referred to a boiling water reactor although the invention is applicable also to a pressure water reactor.

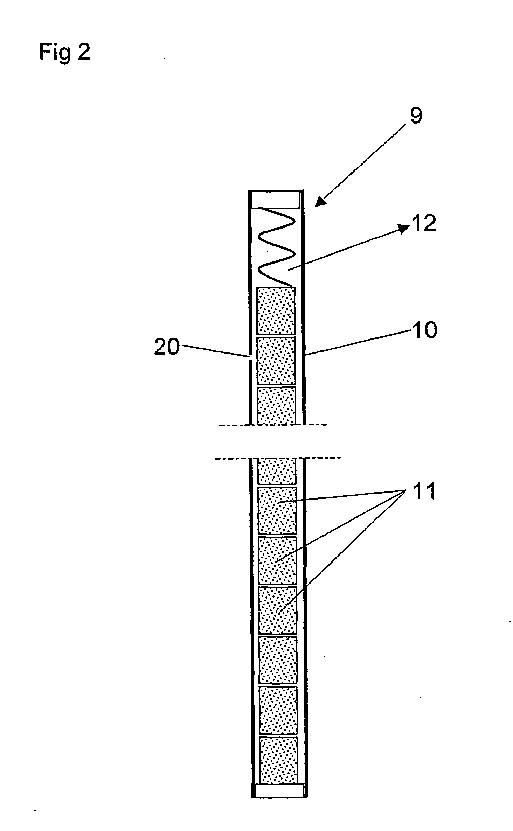

The reactor 1 encloses a core with a plurality of fuel elements 7 and a number of control rods 8. Each fuel element 7 includes a plurality of fuel rods 9, see Fig. 2, which each includes a cladding 10 and nuclear fuel in the form of a pile of fuel pellets 11 which are enclosed in an inner space 12 formed by the cladding 10. Since the fuel pellets 11 does not take up the whole inner space 12 a free volume is formed in the inner space 12 of the cladding 10. The size of the free volume varies with the temperature of the fuel pellets 11 and thus with the thermal expansion of the fuel pellets 11.

Each of the fuel rods 8 is insertable to and extractable from a respective position between respective fuel elements 7 in the core by means of drive members 13. The control rods 8 can be used for influencing or controlling the power of the reactor 1. When the control rods 8 are extracted the nuclear chain reaction proceeds and when the control rods 8 are inserted the nuclear chain reactor stops at least in the proximity of the inserted control rods 8. During normal operation of the reactor, most of the control rods 8 are extracted, compare Fig. 1.

In a boiling water reactor steam will during normal operation be produced by the coolant water circulating in the plant. The steam is conveyed through the discharge conduit 2 to the utility device 3 which may include a steam turbine and a condenser, not specifically disclosed. From the condenser, the condensed coolant water is conveyed back to the reactor 1, via the feedback conduit 4. The plant also includes an arrangement for catching and removing off-gases produced in the reactor 1. This arrangement may include an off-gas conduit 15. In the off-gas conduit 15 a sensor 16 may be provided. The sensor 16 is arranged to detect a nuclear activity and nuclides formed at the reaction in the fuel rods. If a defect arises on a cladding 10, fission gases will leak out and be conveyed out through the off-gas conduit 15. These fission gases include such radioactive nuclides that can be detected and give substantially immediate information saying that a primary defect has occurred.

According to an embodiment, the reactor 1 may be operated at a normal power, i.e. normally full power, during a normal state. During this normal operation, the reactor 1 is monitored for instance continuously by means of the sensor 16 for detecting a possible defect on the cladding 10 of any of the fuel rods 9 in the core. The possible defect may be a primary defect which for instance has been caused by mechanical wear. The defect is indicated in Fig. 2 at 20.

If such a defect 20 has been detected, the power of the reactor 1 is reduced. The power reduction is made at least within 72 h, preferably within 48 h or more preferably within 24 h after the detection of the defect 20. Advantageously, the power reduction is made as soon as possible, for instance substantially immediately after the detection of the defect 20. This power reduction is obtained through insertion of substantially all control rods 8 by means of the drive members 13, wherein the chain reaction is reduced and thus the power and temperature of the fuel pellets 11 in the fuel rods 9 decrease. By means of this measure a so called hot shut down is obtained, which means that the chain reaction substantially ceases but that the system pressure in the reactor 1 and the temperature of the coolant water in the reactor 1 are substantially maintained.

The reactor 1 is then operated further with the control rods 8 inserted during a particular state which exists during a limited time period. The length of this limited time period may vary depending on a plurality of different factors, such as the size of the reactor 1, how many control rods 8 that has been inserted etc. During this time period, the power is thus substantially reduced in relation to the normal full power. The time period has to have at least such a length that the temperature of the fuel pellets decreases significantly. The limited time period may for instance rest from parts of an hour of some hours to 1, 2, 3 or 4 days. For instance, the limited time period may be at least 10, 20, 30, 40 or 50 minutes, or 1, 2, 3, 4, 5, 6, 7, 10, 14, 20 or more hours. The limited time period may maximally be 4, 3, 2 or 1 days.

By means of such an power reduction, the thermal expansion of the fuel pellets 11 will decrease and the free volume in the inner space 12 of the defect fuel rod 9 will increase. This volume increase means that further steam will penetrate the inner space 12 so that the pressure equalization between the inner space 12 and the system pressure is maintained. Furthermore, the lower temperature of the fuel pellets 11 means that the reaction rate for the oxidation of the cladding 10 and the fuel pellets 11 as well as for the hydrogenation of the cladding 10 decrease. The lower fuel pellet temperature and the larger free volume also means that the gases, i.e. the fill gas, fission gases, hydrogen gas and steam, in the inner space 12 will be mixed through diffusion. Thanks to such a mixing of hydrogen and water molecules in the inner space 12, the hydrogen absorption during continuing operation will take place more homogeneously along the whole fuel rod 9 and not be concentrated to a smaller local zone of the cladding 10.

Substantially immediately after this time period, when the equalization has taken place, the inserted control rods 8 may again be extracted for continuing operation of the reactor 1 at substantially full power and with the same set of fuel rods 8, i.e. the defect fuel rod 8 may be maintained in the core until the next scheduled shut down for fuel exchange.

It is to be noted that it may be possible during the defined time period to insert merely some of the control rods 8 to the respective position. The particular state may also be established for parts of the core in successive periods, wherein said reduction of the power is obtained through successive insertion of various groups of said control rods to respective position in the core. Each such group then advantageously defines a specific part of the core. It is also possible to imagine insertion of more than half of the control rods 8 for obtaining an power reduction influencing a greater fraction of the fuel elements of the reactor.

According to a variant of the method the particular state includes that at least some or substantially all control rods 8 alternately are inserted to or extracted from the respective position for obtaining an alternating increase and decrease of the power. In such away, the temperature and the thermal expansion of the fuel pellets 11 will also increase and decrease in an alternating manner, which means that the mixing of the gases in the inner space is accelerated.

The invention is not limited to the embodiments disclosed but may be varied and modified within the scope of the following claims.

## Claims

1. A method for operating a reactor of a nuclear plant in which the reactor encloses a core having a plurality of fuel elements and a number of control rods,
wherein each fuel element includes a plurality of fuel rods, which each includes a cladding and nuclear fuel enclosed in an inner space formed by the cladding,
wherein each of the control rods is insertable to and extractable from a respective position between respective fuel elements in the core in order to influence the power of the reactor,
wherein the method includes the following steps:
operating the reactor at a normal power during a normal state, monitoring the reactor for detecting a primary defect on the cladding of any of the fuel rods,
reducing the power of the reactor at least within 72h after detecting such a primary defect,
operating the reactor during a particular state during a limited time period during which the reactor at least periodically is operated at the reduced power in relation to the normal power, and
extracting said inserted control rods after said time period for continuing operation of the reactor at substantially the normal state.

2. A method according to claim 1, wherein said reducing of the power is obtained through inserting at least some of said control rods to the respective position in the core.

3. A method according to claim 2, wherein substantially all control rods are at least periodically time inserted to the respective position in the core during the particular state.

4. A method according to any one of claims 1 and 2, wherein said reducing of the power is obtained through successive inserting of different groups of said control rods to the respective position in the core, wherein each such group defines a respective specific part of the core.

5. A method according to any one of the preceding claims, wherein said reducing of the power is performed at least within 48h after the detection of a primary defect.

6. A method according to any one of the preceding claims, wherein said reducing of the power is performed at least within 27h after the detection of a primary defect.

7. A method according to any one of the preceding claims, wherein said reducing of the power is performed substantially immediately after the detection of a primary defect.

8. A method according to any one of the preceding claims, Wherein the reactor is operated at the reduced power during the whole time period.

9. A method according to claims 2 and 8, wherein substantially all control rods are inserted into the respective position in the core during the whole time period.

10. A method according to any one of claims 1 to 7, wherein the particular state involves that at least some of the control rods are alternately inserted into and extracted from the respective position for obtaining an alternating increase and decrease of the power.

11. A method according to any one of the preceding claims, wherein said monitoring includes continuous monitoring during the operation of the reactor.

12. A method according to claim 9, wherein the monitoring includes sensing of a radioactive activity in a gas flow from the reactor.

## Patentansprüche

1. Verfahren zum Betreiben eines Reaktors einer Nuklearanlage, wobei der Reaktor einen Kern mit einer Mehrzahl von Brennelementen und einer Anzahl von Steuerstäben aufweist,
wobei jedes Brennelement aus einer Mehrzahl von Brennstäben besteht, wobei jeder eine Hülse und einen Brennstoff, der im Innenraum der Hülse eingeschlossen ist, aufweist,
wobei jeder der Steuerstäbe in eine jeweilige Position zwischen die jeweiligen Brennelemente im Kern einführbar und ausführbar ist, um die Energie des Reaktors zu beeinflussen,
wobei das Verfahren die folgenden Schritte aufweist:
Betreiben eines Reaktors bei normaler Leistung während eines Normalzustandes, Überwachen des Reaktors zur Ermittlung eines Primärschadens an der Hülse eines der Brennstäbe,
Reduzieren der Leistung des Reaktors zumindest innerhalb 72 h nach Detektion eines solchen Primärdefekts,
Betreiben des Reaktors während eines bestimmten Zustandes über einen begrenzten Zeitraum, während welchem der Reaktor zumindest periodisch mit verminderter Leistung im Verhältnis zur normalen Leistung betrieben wird und
Ausführen der eingeführten Steuerstäbe nach dem Zeitraum zum kontinuierlichen Betrieb des Reaktors bei wesentlichem Normalzustand.

2. Verfahren nach Anspruch 1, **dadurch gekennzeichnet, dass** das Reduzieren der Leistung durch Einführen zumindest einiger der Steuerstäbe in die jeweilige Position im Kern erfolgt.

3. Verfahren nach Anspruch 2, **dadurch gekennzeichnet, dass** im Wesentlichen alle Steuerstäbe in zumindest periodischer Zeit in die jeweilige Position im Kern während des bestimmten Zustandes eingeführt werden.

4. Verfahren nach einem der Ansprüche 1 oder 2, **dadurch gekennzeichnet, dass** das Reduzieren der Leistung durch fortlaufendes Einführen von verschiedenen Gruppen von Steuerstäben in die jeweilige Position im Kern erfolgt, wobei jede der Gruppen einen jeweiligen spezifischen Teil des Kerns bildet.

5. Verfahren nach einem der vorhergehenden Ansprüche, **dadurch gekennzeichnet, dass** das Reduzieren der Leistung zumindest innerhalb von 48h nach der Detektion des Primärdefekts erfolgt.

6. Verfahren nach einem der vorhergehenden Ansprüche, **dadurch gekennzeichnet, dass** das Reduzieren der Leistung zumindest innerhalb von 27h nach der Detektion des Primärdefekts erfolgt.

7. Verfahren nach einem der vorhergehenden Ansprüche, **dadurch gekennzeichnet, dass** das Reduzieren der Leistung im Wesentlichen direkt nach der Detektion des Primärdefekts erfolgt.

8. Verfahren nach einem der vorhergehenden Ansprüche, **dadurch gekennzeichnet, dass** der Reaktor mit reduzierter Leistung während des gesamten Zeitraums betrieben wird.

9. Verfahren nach den Ansprüchen 2 und 8, **dadurch gekennzeichnet, dass** im Wesentlichen alle Steuerstäbe in die jeweilige Position im Kern während des gesamten Zeitraums eingeführt sind.

10. Verfahren nach einem der Ansprüche 1 bis 7, **dadurch gekennzeichnet, dass** der bestimmte Zustand umfasst, dass zumindest einige der Steuerstäbe alternierend in die jeweilige Position eingeführt oder aus der jeweiligen Position ausgeführt werden, um einen alternierenden Anstieg oder Abfall der Leistung zu erreichen.

11. Verfahren nach einem der vorhergehenden Ansprüche, **dadurch gekennzeichnet, dass** das Überwachen ein kontinuierliches Überwachen während des Betriebs des Reaktors beinhaltet.

12. Verfahren nach Anspruch 9, **dadurch gekennzeichnet, dass** das Überwachen ein Messen der radioaktiven Aktivität in einem Gasstrom aus dem Reaktor beinhaltet.

## Revendications

1. Procédé d'exploitation d'un réacteur d'une centrale nucléaire dans laquelle le réacteur enferme un coeur possédant une pluralité d'éléments combustibles et un nombre de barres de commande,
dans lequel chaque élément combustible comprend une pluralité de barres de combustible, dont chacune comprend une gaine et un combustible nucléaire enfermé dans un espace intérieur formé par la gaine,
dans lequel chacune des barres de commande peut être insérée dans une position respective entre des éléments combustibles respectifs dans le coeur, et extraite de celle-ci, afin d'influencer la puissance du réacteur,
dans lequel le procédé comprend les étapes suivantes consistant à :
exploiter le réacteur à une puissance normale au cours d'un état normal,
surveiller le réacteur pour détecter un défaut primaire sur la gaine d'une quelconque des barres de combustible,
réduire la puissance du réacteur au moins au sein d'un intervalle de temps de 72 h après avoir détecté un tel défaut primaire,
exploiter le réacteur dans un état particulier pendant une période limitée au cours de laquelle le réacteur est au moins périodiquement exploité à la puissance réduite par rapport à la puissance normale, et
extraire lesdites barres de commande insérées après ladite période pour continuer l'exploitation du réacteur sensiblement à l'état normal.

2. Procédé selon la revendication 1, dans lequel ladite étape consistant à réduire la puissance est obtenue en insérant au moins certaines desdites barres de commande dans la position respective dans le coeur.

3. Procédé selon la revendication 2, dans lequel sensiblement toutes les barres de commande sont au moins périodiquement insérées dans la position respective dans le coeur au cours de l'état particulier.

4. Procédé selon une quelconque des revendications 1 et 2, dans lequel ladite étape consistant à réduire la puissance est obtenue en insérant successivement différents groupes desdites barres de commande dans la position respective dans le coeur, dans lequel chaque tel groupe définit une partie spécifique respective du coeur.

5. Procédé selon une quelconque des revendications précédentes, dans lequel ladite étape consistant à réduire la puissance est réalisée au moins au sein d'un intervalle de temps de 48 h après la détection d'un défaut primaire.

6. Procédé selon une quelconque des revendications précédentes, dans lequel ladite étape consistant à réduire la puissance est réalisée au moins au sein d'un intervalle de temps de 27 h après la détection d'un défaut primaire.

7. Procédé selon une quelconque des revendications précédentes, dans lequel ladite étape consistant à réduire la puissance est réalisée sensiblement immédiatement après la détection d'un défaut primaire.

8. Procédé selon une quelconque des revendications précédentes, dans lequel le réacteur est exploité à la puissance réduite au cours de la période entière.

9. Procédé selon les revendications 2 et 8, dans lequel sensiblement toutes les barres de commande sont insérées dans la position respective dans le coeur au cours de la période entière.

10. Procédé selon une quelconque des revendications 1 à 7, dans lequel l'état particulier comprenant le fait qu'au moins certaines des barres de commande sont insérées en alternance dans et extraites de la position respective pour obtenir une augmentation et une réduction alternées de la puissance.

11. Procédé selon une quelconque des revendications précédentes, dans lequel ladite étape consistant à surveiller comprend la surveillance continue au cours de l'exploitation du réacteur.

12. Procédé selon la revendication 9, dans lequel l'étape consistant à surveiller comprend la détection d'une activité radioactive dans un écoulement gazeux à partir du réacteur.
